# FASCICULE DE BREVET EUROPEEN

(11) **EP 2 228 262 B1**
(45) Date de publication et mention de la délivrance du brevet: **29.08.2012**
(21) Numéro de dépôt: 10305248.6
(22) Date de dépôt: 12.03.2010
(51) Int. Cl.: B60R 5/04

(54) **Dispositif d'aide au chargement et au déchargement du coffre d'un véhicule, véhicule équipé d'un tel dispositif**
Unterstützungsvorrichtung für das Be-oder Entladen eines Fahrzeugkofferraums und Fahrzeug hierfür
Assisting device for loading and unloading the vehicle boot and vehicle equipped with such device

(30) Priorité: 13.03.2009 FR 0951602
(43) Date de publication de la demande: 15.09.2010
(73) Titulaire: Faurecia Automotive Industrie, 92000 Nanterre (FR)
(72) Inventeur: Decorme, M. Jacques, 08090, MONTCY NOTRE DAME (FR); Jeunehomme, M. Franck, 08800, MONTHERME (FR); Bilien, Christelle, 08200, SEDAN (FR); Curien, Jean-Yves, 67220, BASSEMBERG (FR); Laime, Sébastien, 08090, BELVAL (FR)
(74) Mandataire: Domenego, Bertrand

(56) Documents cités:
- WO-A-98/23465
- DE-A1-102004 051 622
- US-A- 2 091 069
- US-A1- 2002 034 430
- US-A1- 2007 052 253
- US-A1- 2009 074 547
- US-B1- 7 188 881

## Description

L'invention a pour domaine celui des dispositifs d'aide au chargement et au déchargement du coffre d'un véhicule.

Certains véhicules automobiles comportent un coffre arrière délimité, inférieurement, par un fond qui est bordé, du côté arrière, par un seuil surélevé faisant saillie verticalement au-dessus du niveau du fond du coffre.

Il s'ensuit que les opérations de chargement et de déchargement d'un tel coffre sont difficiles. En effet, il faut que l'opérateur soulève la charge à disposer ou à retirer du coffre, d'une hauteur suffisante pour qu'elle franchisse le seuil du coffre. Ces opérations sont d'autant plus difficiles à réaliser que la charge est lourde et que l'opérateur doit, à un moment ou à un autre, être penché vers l'intérieur du coffre pour accéder au volume intérieur.

Le document US 7,188,881 B1 décrit un dispositif d'aide au chargement et au déchargement du type comportant un plancher mobile entre une position rétractée dans laquelle le plancher est disposé intégralement à l'intérieur du coffre, de sorte qu'un bord arrière du plancher soit situé à un niveau inférieur ou égal au niveau le plus haut du seuil ; et une position de chargement / déchargement du coffre dans laquelle le bord arrière du plancher est situé au-dessus du niveau le plus haut du seuil et en saillie hors du coffre, au-delà du seuil.

Dans ce dispositif connu, le plancher coulisse le long de rails disposés longitudinalement, formant cadre de support. Au niveau de leurs extrémités avant, les rails sont solidaires du fond du coffre par des liaisons charnière autour d'un axe pivot disposé transversalement. Au niveau de leurs extrémités arrière, les rails reposent sur des cames montées sur un arbre disposé transversalement.

Dans la position rétractée, le plancher est horizontal et les rails reposent sur le fond du coffre. Pour déployer le plancher, l'opérateur tire sur une poignée latérale couplée à l'arbre à cames, pour faire tourner l'arbre à cames de manière à ce que les cames soulèvent l'arrière des rails et fassent pivoter l'ensemble formé par le plancher et les rails autour de l'axe pivot. Une fois incliné, l'opérateur fait coulisser le plancher le long des rails pour qu'une partie arrière du plancher sorte du coffre, le bord arrière passant au-dessus du seuil.

Dans ce dispositif, l'actionnement d'une poignée latérale pour faire tourner les cames en vue de soulever l'arrière du plancher est une opération difficile. D'une part, lorsque le coffre est chargé, l'accès à cette poignée est rendu impossible. De plus, la force que l'opérateur doit appliquer pour mettre en rotation les cames et soulever l'arrière du plancher est élevée et difficilement réalisable dans la pratique. Ceci est d'autant plus vrai que la charge disposée sur le plancher est importante et que le bras de levier autour de l'arbre à cames reste réduit.

Par ailleurs, lorsque le plancher est dans la position de chargement / déchargement, sa surface supérieure fait un angle avec l'horizontal. Si les frottements entre la charge déposée et la surface supérieure du plancher sont insuffisants, la charge risque de glisser ou de rouler vers la partie du coffre orientée vers l'avant du véhicule.

L'invention a donc pour but de proposer un dispositif d'aide au chargement et au déchargement amélioré, répondant aux problèmes précités et dont la manipulation est facile et se fait en toute sécurité.

Pour cela l'invention porte sur dispositif d'aide au chargement et au déchargement pour un coffre de véhicule automobile, le coffre étant délimité, inférieurement, par un fond bordé, du côté arrière, par un seuil surélevé faisant saillie verticalement au-dessus du niveau du fond du coffre, le dispositif comprenant : un plancher ayant une surface supérieure sensiblement plane destinée à recevoir une charge et une surface inférieure portant au moins une piste de guidage, le plancher étant mobile entre : une position rétractée dans laquelle le plancher est disposé intégralement à l'intérieur du coffre, de sorte qu'un rebord arrière du plancher soit situé à un niveau inférieur ou égal au niveau le plus haut du seuil ; et une position de chargement / déchargement du coffre dans laquelle le rebord arrière du plancher est situé au-dessus du niveau le plus haut du seuil et en saillie hors du coffre, au-delà du seuil ; et, au moins un moyen de guidage du plancher, solidaire du fond du coffre, apte à coopérer par contact avec la ou chaque piste de guidage pour guider le déplacement du plancher. La ou chaque piste de guidage comprend une portion inclinée d'un premier angle par rapport à la surface supérieure du plancher, et propre, par contact avec une région du ou de chaque moyen de guidage, à soulever le plancher lors de son déplacement pour que le rebord arrière de celui-ci franchisse le seuil.

Suivant des modes particuliers de réalisation, le dispositif d'aide comporte une ou plusieurs des caractéristiques suivantes, prise(s) isolément ou suivant toutes les combinaisons techniquement possibles :
- la région du ou de chaque moyen de guidage est inclinée d'un second angle par rapport au fond sensiblement horizontal ;
- la portion inclinée de la ou de chaque piste de guidage comprend un rail dit mobile fixé sur la surface inférieure du plancher, et la région du ou de chaque moyen de guidage comprend un rail dit fixe, le rail mobile étant apte à coulisser le long du rail fixe ;
- le rail fixe est monté pivotant sur le fond du coffre par une liaison charnière, et en ce que le rail fixe repose sur un support fixé à la structure du véhicule et propre à maintenir le rail fixe incliné du second angle par rapport au fond sensiblement horizontal ;
- les premier et second angles sont égaux de sorte que la surface supérieure du plancher est sensiblement horizontale, dans chaque position du plancher entre sa position rétractée et sa position de chargement / déchargement ;
- le ou chaque moyen de guidage comprend, en outre, un moyen de roulement logé dans le seuil du coffre, dont la surface de roulement fait saillie à l'extérieur du seuil du coffre, et adapté pour être en contact direct de la portion inclinée d'une piste de guidage lors du déplacement du plancher ;
- la portion inclinée de la ou de chaque piste de guidage comprend un chanfrein ménagé sur le bord arrière du plancher, le chanfrein formant un angle aigu avec la surface supérieure du plancher ;
- la portion inclinée forme une première portion d'une piste de guidage, une seconde portion de la piste de guidage comprend un rail dit mobile fixé sur la surface inférieure du plancher, les première et seconde portions se raccordant continûment ;
- le dispositif comprend, en outre, un rail dit fixe, le rail mobile étant apte à coulisser le long du rail fixe ;
- le rail fixe est monté pivotant sur le fond du coffre par une liaison charnière, et en ce que en position rétractée du plancher, le rail fixe repose directement sur le fond du coffre sensiblement horizontal ;
- le ou chaque moyen de guidage comprend un moyen de roulement définissant la région destinée à coopérer avec la portion inclinée d'une piste de guidage, la région faisant saillie à l'extérieur du seuil du coffre pour venir en contact direct de la portion inclinée;
- le dispositif comprend, en outre, au moins un moyen de préhension du plancher, prévu sur le plancher au voisinage du rebord arrière de celui-ci, le ou chaque moyen de préhension comprenant des moyens de déblocage adaptés pour que leur actionnement autorise le mouvement relatif du ou de chaque moyen de guidage le long du ou de chaque piste de guidage ;
- le dispositif comprend des moyens de sécurité, propres à interdire tout mouvement relatif du ou de chaque moyen de guidage le long du ou de chaque piste de guidage, dans chaque position du plancher entre ses positions extrêmes rétractée et de chargement / déchargement, les moyens de déblocage de ou de chaque moyen de préhension étant propres à déverrouiller les moyens de sécurité pour autoriser un mouvement relatif du ou de chaque moyen de guidage le long du ou de chaque piste de guidage, dans chaque position du plancher entre les positions extrêmes rétractée et de chargement /déchargement ;
- le plancher est monté pivotant par rapport au fond du coffre, le ou chaque moyen de préhension comprenant des moyens de libération adaptés pour que leur actionnement autorise le pivotement du plancher par rapport au fond du coffre ;
- le dispositif comprend un moyen d'entraînement du déplacement du plancher.

L'invention a également pour objet un véhicule automobile équipé du dispositif d'aide présenté ci-dessus.

L'invention et ses avantages apparaîtront plus clairement à la lecture de la description qui va suivre, donnée uniquement à titre d'exemple, et faite en se référant aux dessins annexés, sur lesquels :
- la Figure 1 est une vue schématique de dessus d'un coffre équipé d'un dispositif d'aide au chargement et au déchargement selon un premier mode de réalisation ;
- la Figure 2 est une coupe selon un plan vertical médian du coffre de la Figure 1, le dispositif d'aide étant dans sa position rétractée ;
- la Figure 3 est une coupe selon un plan vertical médian du coffre de la Figure 1, le dispositif d'aide étant dans sa position de chargement / déchargement ;
- la Figure 4 est une section locale agrandie selon la ligne IV-IV de la Figure 2;
- la Figure 5 est une coupe selon un plan vertical médian d'un coffre équipé d'un dispositif d'aide au chargement et au déchargement selon un second mode de réalisation, le dispositif d'aide étant dans sa position rétractée ; et,
- la Figure 6 est une coupe selon un plan vertical médian du coffre de la Figure 5, le dispositif d'aide étant dans sa position de chargement / déchargement.

Dans ce qui suit, est reprise la convention d'orientation couramment utilisée dans le domaine automobile. Selon cette convention, l'axe longitudinal X du véhicule est orienté positivement de l'avant vers l'arrière, l'axe transversal Y est orienté positivement de la gauche vers la droite, et l'axe vertical Z est orienté de bas en haut.

Le principe général du dispositif d'aide au chargement et au déchargement consiste à guider le déplacement d'un plancher mobile, par contact de pistes de guidage, portées par la surface inférieure du plancher, contre des moyens de guidage, solidaires du fond du coffre. La géométrie de ces pistes est adaptée pour que, au cours de son déplacement, le plancher se soulève pour franchir le seuil surélevé du coffre. Le déplacement du plancher s'effectue entre une position rétractée, dans laquelle le plancher est intégralement reçu à l'intérieur du coffre du véhicule, et une position de chargement / déchargement, dans laquelle une partie arrière du plancher fait saillie hors du coffre, au-delà du seuil surélevé du coffre du véhicule.

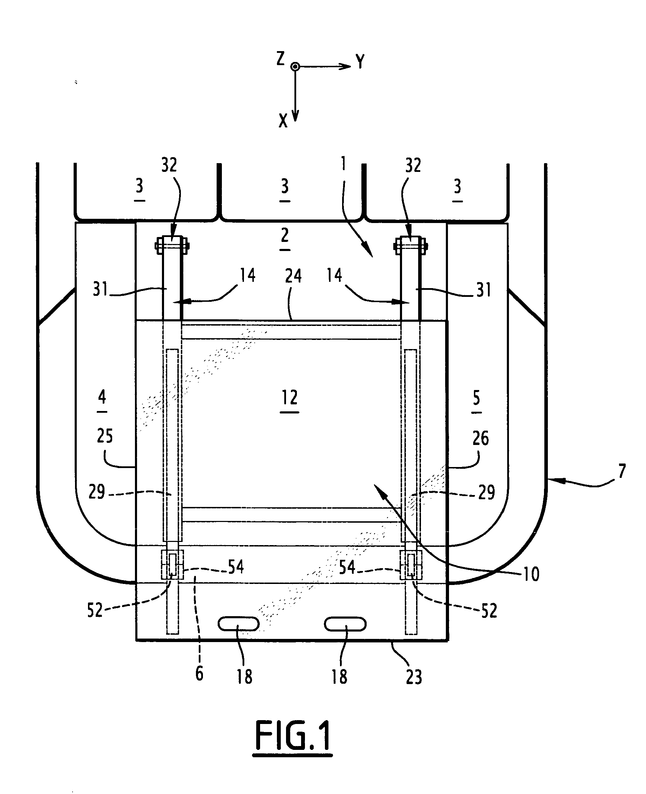

La Figure 1 est une vue de dessus d'un ensemble arrière d'un véhicule automobile délimitant un coffre 1. Le coffre 1 est délimité inférieurement par un fond 2. Le contour du fond 2 est défini, à l'avant, par une rangée de sièges 3, à gauche et à droite, par des pièces de carrosserie latérales, et à l'arrière, par un seuil 6.

Les pièces de carrosserie latérales sont adaptées de manière à recevoir les roues arrière du véhicule et comprennent un garnissage intérieur délimitant latéralement le coffre 1

Sur la Figure 1 le seuil 6 fait partie intégrante d'une portion centrale du pare-chocs arrière 7 du véhicule 2, tandis que les portions d'extrémité du pare-chocs 7, de part et d'autre de la portion centrale, sont recourbées et constituent des pièces de carrosserie latérales.

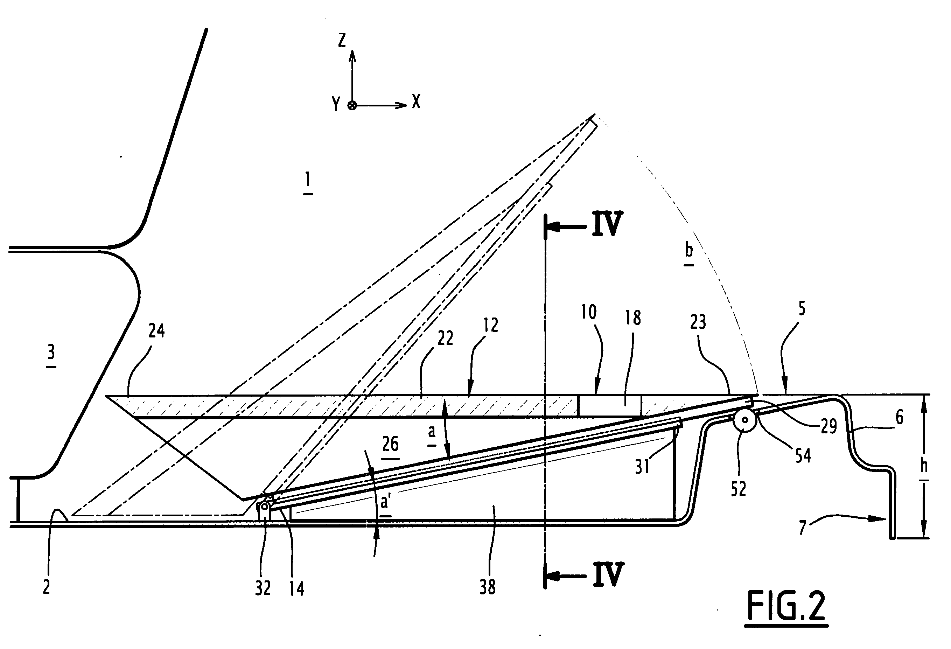

Comme cela est représenté de côté sur la Figure 2, le seuil 6 fait saillie verticalement d'une hauteur h au-dessus du niveau du fond 2.

Pour faciliter le chargement et le déchargement du coffre 1, celui-ci est équipé d'un dispositif d'aide au chargement et au déchargement 10.

Le dispositif d'aide 10 comporte un plancher mobile 12, deux moyens de guidage 14, respectivement gauche et droit, et deux moyens de préhension 18, respectivement gauche et droit.

Le plancher 12 comporte une surface supérieure 22, sensiblement plane et rectangulaire, présentant un bord arrière 23, un bord avant 24, et des bords latéraux, respectivement gauche 25 et droit 26. Comme cela est représenté sur les figures 1 et 2, la surface de chargement comporte la surface supérieure 22 du plancher mobile 12 et, de part et d'autre de celle-ci, des surfaces fixes respectivement gauche 4 et droite 5. Les surfaces 4 et 5 sont affleurantes à la surface supérieure 22.

Comme on peut le voir pour le bord droit 26 sur la figure 2, les bords latéraux 25 et 26 sont des bords tombés, conformés de sorte que le plancher 12 possède une forme générale en coin, l'épaisseur du plancher 12 allant en diminuant vers le bord arrière 23. L'angle d'ouverture de cette forme en coin est un premier angle a.

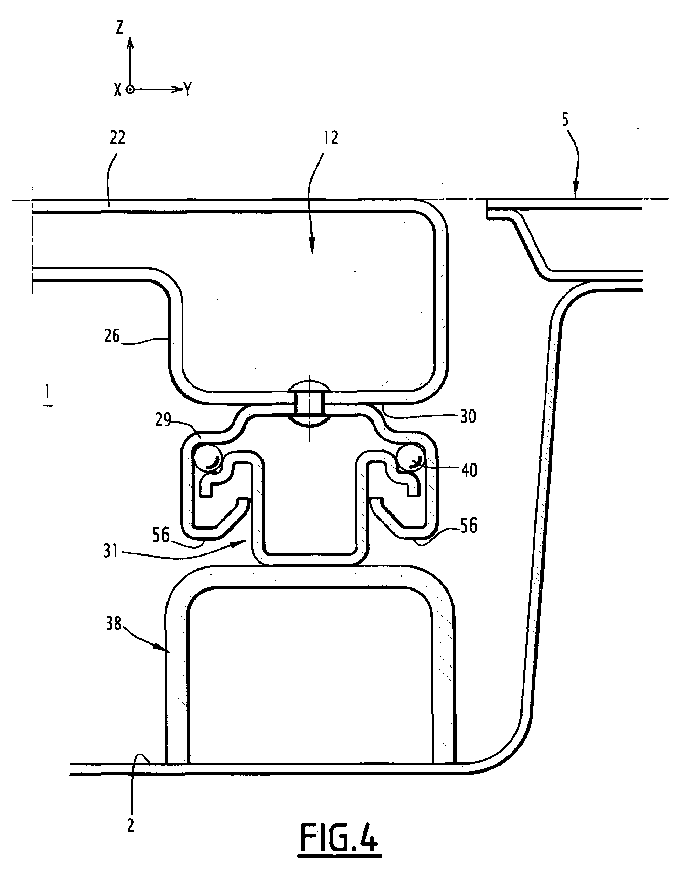

Comme cela est représenté en détail sur la Figure 4 pour le côté droit, un rail mobile 29 est fixé sur le chant 30 de chacun des rebords tombés 25 et 26, par exemple au moyen de rivets en plastique clipsables dans des orifices adaptés.

Le moyen de guidage 14 comporte un rail dit fixe 31 solidaire du fond 2 du coffre. L'extrémité arrière du rail fixe 31 est solidaire du fond 2 par l'intermédiaire d'une liaison charnière 32, réalisée par exemple par une chappe. L'axe pivot de la liaison charnière 32 est disposé parallèlement à l'axe transversal Y du véhicule.

Le rail fixe 31 est posé sur toute sa longueur sur un profilé rectiligne 38. Le profilé 38 comporte un fond, sur lequel repose le rail fixe 31, et deux rives s'étendant verticalement vers le bas.

Comme cela sera plus compréhensible en se reportant à nouveau à la figure 2, les rives du profilé 38 ont une forme triangulaire dont le grand côté repose sur le fond 2 du coffre et le petit côté est disposé au voisinage du seuil 6. L'angle d'ouverture a' du sommet le plus éloigné du seuil 6 est adapté pour que le fond du profilé 38 constitue un pan incliné. Le profilé 38 est fixé par des moyens adaptés au fond 2.

Le rail fixe 31 est reçu à l'intérieur du rail mobile 29. Le mouvement relatif de coulissement du rail fixe 31 par rapport au rail mobile 29 sur une certaine longueur est assuré par la présence de billes de roulement 40.

Le rail mobile 29 définit une piste de guidage sur une portion de laquelle appuie, par l'intermédiaire des billes 40, une région du rail fixe 31 lors du déplacement du plancher 12. Cette portion de piste de guidage est rectiligne et inclinée par rapport à la surface supérieure 22 du plancher 12 dudit premier angle a.

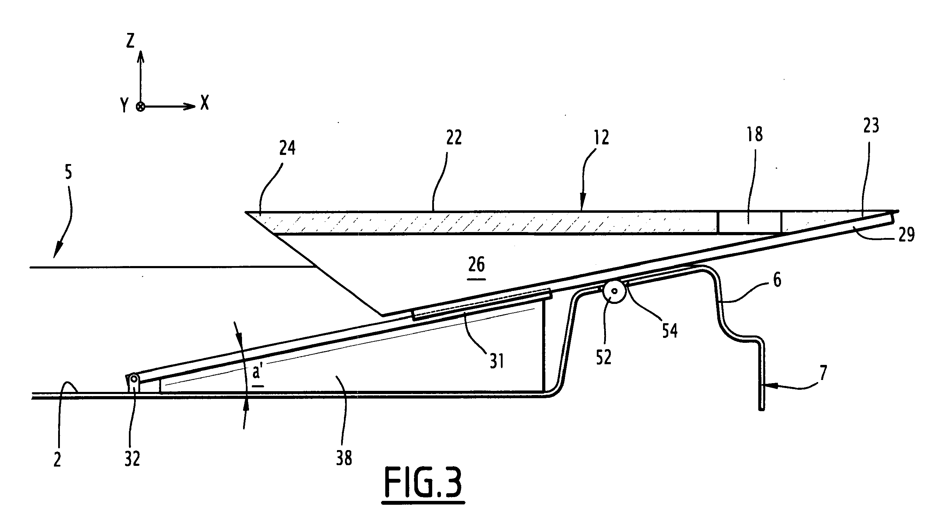

Le second angle a' est choisi pour qu'en position rétractée, représentée sur la Figure 2, le bord arrière 23 du plancher 12 soit situé au même niveau que la génératrice du seuil 6 se situant au niveau le plus haut. Dans la position de chargement / déchargement, représentée sur la Figure 3, le rebord arrière 23 du plancher 12 est situé, verticalement, au-dessus du niveau de la génératrice du seuil 6 se situant au niveau le plus haut, et, horizontalement, au-delà du seuil 6, hors du coffre 1.

On notera que la forme en coin du plancher 12 est adaptée pour que la surface supérieure 22 du plancher 12 reste sensiblement horizontale, à tout instant du déplacement du plancher 12 entre sa position rétractée et sa position de chargement / déchargement. Pour cela la valeur du premier angle a est choisie égale à la valeur du second angle a'.

Comme cela est représenté schématiquement sur la Figure 1, le dispositif d'aide 10 comporte deux poignées 18, respectivement gauche et droite. Ces poignées 18 ont plusieurs fonctions. Elles permettent à l'opérateur une bonne préhension du plancher 12 pour y appliquer une force de poussée ou de traction propre à déplacer le plancher.

De plus, chaque poignée 18 étant associée à l'un des moyens de guidage 14, elle comprend un moyen de déblocage de ce moyen de guidage 14 associé. En saisissant la poignée, l'opérateur actionne le moyen de déblocage qui déverrouille un moyen de sécurité. Ce moyen de sécurité est, par défaut, dans un état verrouillé qui empêche le mouvement relatif du rail mobile 29 par rapport au rail fixe 31 et, par conséquent, le déplacement du plancher 12. Ainsi, quelle que soit la position du plancher entre les positions extrêmes rétractée et de chargement / déchargement, dès que l'opérateur relâche la poignée 18, les moyens de sécurité verrouillent automatiquement le mouvement relatif des rails fixe et mobile empêchant tout déplacement du plancher 12.

Enfin, le plancher pouvant pivoter autour des liaisons charnière, comme cela sera décrit plus bas, la ou chaque poignée est équipée de moyens de libération adaptés pour que leur actionnement autorise le pivotement du plancher par rapport au fond du coffre.

Avantageusement, le plancher 12 est équipé de deux poignées 18, et l'opérateur doit actionner simultanément les deux moyens de déblocage pour déplacer le plancher 12. Ses mains doivent donc être positionnées sur les poignées 18 et il n'y a pas de risque que l'opérateur, manipulant le plancher d'une main, se coince l'autre main entre le seuil 6 du coffre 1 et le plancher 12. Par ailleurs, en positionnant les deux mains dans les poignées 18, la position de l'opérateur est meilleure pour appliquer une force apte à déplacer le plancher.

Pour que le plancher 12 ne porte pas à faux dans les positions autres que la position rétractée, deux roulettes 52, respectivement gauche et droite, sont prévues dans le seuil 6. Les roulettes 52 sont montées autour d'un axe disposé parallèlement à la direction transversale Y à l'intérieur du seuil 6. La paroi du seuil 6 présente deux lumières 54 à travers lesquelles affleure la surface de roulement de chaque roulette 52. Chaque roulette 52 est disposée de manière à coopérer avec des méplats 56 prévus sur le rail mobile 29.

Les liaisons charnière 32 autorisent un mouvement de pivotement de l'ensemble constitué du plancher 12 et des deux moyens de guidage 14 d'un angle d'ouverture b important, par exemple de l'ordre de 40°. Ce pivotement, représenté en traits mixtes sur la figure 2, permet d'accéder au volume situé sous le plancher 12, entre le fond 2 et le plancher 12 dans sa position rétractée. Ce volume permet par exemple de loger une roue de secours ou du matériel d'urgence, ou de délimiter un espace de rangement protégé. Avantageusement, le rail fixe 31 repose sur le fond du profilé 38 par l'intermédiaire de plots d'amortissement pour améliorer la qualité perçue du dispositif lorsque l'opérateur abaisse le plancher 12, en évitant un contact direct du rail fixe 31 et du profilé 38.

En variante, alors que sur la Figure 4 le rail fixe 31 est reçu à l'intérieur du rail mobile 29, le montage est inversé de sorte que ce soit le rail fixe qui reçoive intérieurement le rail mobile. Mais la première variante présentée ci-dessus a l'avantage de masquer à l'opérateur les surfaces des rails coopérant les unes avec les autres et qui sont recouvertes de graisse pour en améliorer le glissement relatif. Ainsi, l'opérateur ne risque pas de se salir en manipulant le dispositif d'aide au chargement et au déchargement.

Dans une autre variante, indépendante de la précédente, la piste de guidage et le moyen de guidage coopérant avec cette piste sont réalisés d'une autre manière. Par exemple, le bord tombé du plancher peut porter une crémaillère inclinée par rapport à la surface supérieure du plancher et la partie de carrosserie latérale voisine peut porter une roue dentée engrainant la crémaillère.

Dans encore une autre variante, le déplacement du plancher est facilité par la présence d'un moyen d'entraînement, tel qu'un moteur électrique. Soit le moteur a pour fonction de réduire l'effort que doit fournir l'opérateur, et, dans ce cas, le moteur est actionné par les moyens de déblocage intégrés dans les poignées. Soit le moteur électrique génère l'intégralité de la force nécessaire au déplacement du plancher, et, dans ce cas, le moteur est actionné par un interrupteur placé par exemple sur le tableau de bord ou une télécommande. Les moyens de préhension ne sont alors plus nécessaires.

Enfin, le profilé formant pan incliné pourrait être solidarisé avec le rail fixe, par exemple au moyen de rivets. Le profilé serait alors mobile par rotation autour de l'axe de pivotement. Les rives du profilé viennent alors simplement en appui contre le fond du coffre.

L'homme du métier constatera que le dispositif d'aide qui vient d'être décrit est robuste et permet d'aider au chargement du coffre d'un véhicule. Il peut recevoir des charges lourdes, de l'ordre de 100 kg. La force que l'opérateur doit appliquer pour translater le plancher est réduite, puisque le plancher se déplace le long d'un pan incliné.

Avantageusement, les éléments constitutifs du dispositif d'aide, tels que les rails mobile et fixe, les poignées ayant une fonction de déblocage, et les moyens de verrouillage du mouvement relatif des rails sont repris de dispositifs similaires équipant les sièges de véhicule automobile,tels que ceux décrit dans le document FR 2 776 581.

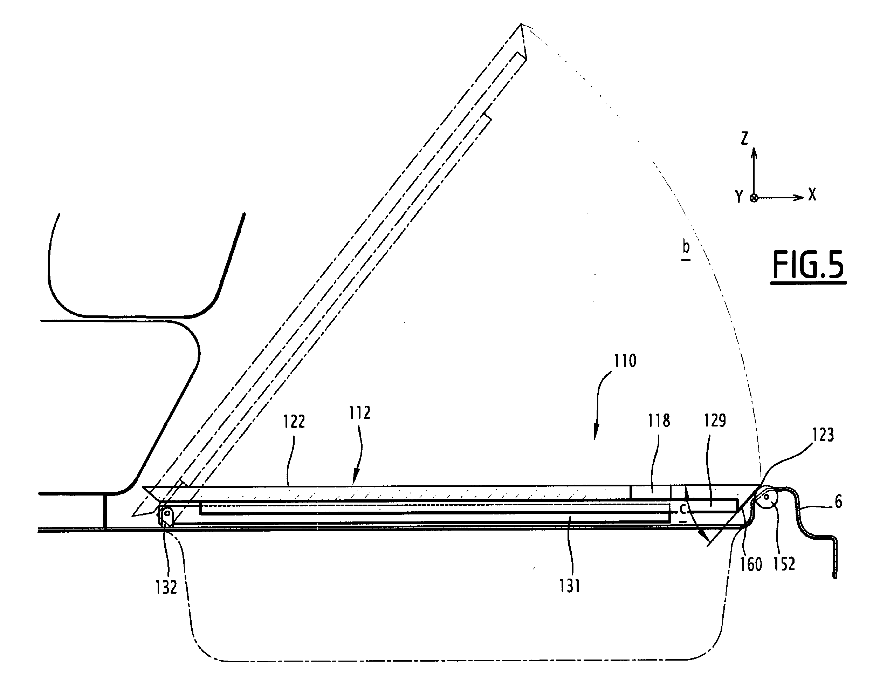

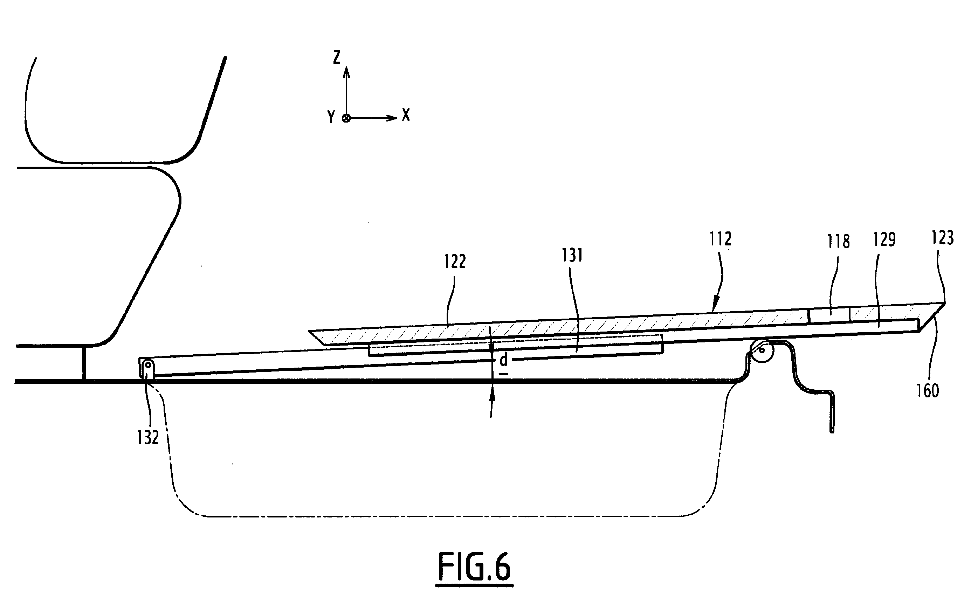

Les Figures 5 et 6 représentent un second mode de réalisation du dispositif d'aide au chargement et au déchargement pour le cas d'un coffre dont la barre de seuil est moins haute que dans le cas du premier mode de réalisation présenté ci-dessus. Sur les Figures 5 et 6, un composant structurellement similaire à un composant représenté sur les Figures 1 à 4 est indiqué par une référence augmentée d'une centaine par rapport à la référence utilisée pour indiquer ce composant sur les Figures 1 à 4.

Le plancher 112 du dispositif d'aide 110 est plat et sa surface supérieure 122 est sensiblement horizontale dans la position rétractée, représentée à la Figure 5. La surface inférieure du plancher porte deux rails dits mobiles 129. Chaque rail mobile 129 reçoit un rail dit fixe 131, solidaire du fond 2 du coffre 1. Chaque rail fixe 131 est relié au fond 2 par une liaison charnière 132. Par ailleurs, dans la position rétractée, les rails fixes 131 reposent horizontalement sur le fond 2 du coffre 1 par l'intermédiaire de plots d'amortissement.

Le rebord arrière 123 du plancher 112 présente deux chanfreins 160, respectivement, gauche et droit, aptes à coopérer, respectivement, avec des roulettes 152, gauche et droite, logées dans le seuil surélevé 6. Un chanfrein 160 est orienté vers le bas et constitue une surface inclinée d'un angle c, aigu, par rapport à la surface supérieure 122 du plancher 112. Il définit une portion de piste de guidage en contact de laquelle est mise la surface de roulement d'une roulette 152. Sous l'effet d'une force de traction orientée longitudinalement, la force produite par réaction à l'application du chanfrein 160 contre la roulette 152, est apte à soulever le rebord arrière 123 du plancher 112.

Une fois le plancher 112 soulevé, la surface de roulement des roulettes 152 est appliquée contre des méplats prévus sur chacun des rails mobiles 129. Ces méplats forment, dans ce second mode de réalisation, une seconde portion de la piste de guidage. La première portion et la seconde portion sont raccordées l'une à l'autre de manière à constituer une piste de guidage continue, au voisinage de la jonction entre un chanfrein 160 et l'extrémité avant d'un rail mobile 129.

Ainsi, pour passer à la position de chargement / déchargement, représentée à la Figure 6, l'opérateur place les mains dans les poignées 18 du plancher 112 et actionne les moyens de déblocage intégrés. L'opérateur applique sur le plancher 112 une force de traction orientée longitudinalement. Dans un premier temps, la force de réaction générée par les roulettes 152 sur les chanfreins 160 soulève le rebord arrière 123. Le plancher 112 pivote d'un angle d de l'ordre de quelques degrés, de préférence 3°. Cet angle d est suffisant pour permettre au rebord arrière 123 de passer au-dessus du seuil 6 surélevé. L'opérateur applique alors une force de traction orientée longitudinalement, d'intensité plus faible, pour faire coulisser le rail mobile 129 par rapport au rail fixe 131 et déployer le plancher 112. La partie arrière du plancher 112 fait alors saillie hors du coffre, de manière à offrir à l'opérateur une surface de chargement facilement accessible.

Une description similaire pourrait être faite pour décrire la façon dont l'opérateur déplace le plancher de la position de chargement / déchargement vers la position rétractée.

On notera que, de préférence, dans ce second mode de réalisation, l'ensemble du dispositif 110 peut pivoter d'un angle b autour de liaisons charnière 132 pour permettre à l'opérateur un accès à un éventuel volume situé sous le plancher 112 et constituant un espace de rangement protégé.

## Revendications

1. Dispositif d'aide au chargement et au déchargement (10 ; 110) pour un coffre (1) de véhicule automobile, ledit coffre étant délimité, inférieurement, par un fond (2) bordé, du côté arrière, par un seuil (6) surélevé faisant saillie verticalement au-dessus du niveau du fond du coffre, le dispositif comprenant :
- un plancher (12 ; 112) ayant une surface supérieure (22 ; 122) sensiblement plane destinée à recevoir une charge et une surface inférieure portant au moins une piste de guidage, le plancher étant mobile entre : une position rétractée dans laquelle le plancher est disposé intégralement à l'intérieur du coffre, de sorte qu'un rebord arrière (23 ; 123) du plancher soit situé à un niveau inférieur ou égal au niveau le plus haut du seuil ; et une position de chargement / déchargement du coffre dans laquelle le rebord arrière du plancher est situé au-dessus du niveau le plus haut du seuil et en saillie hors du coffre, au-delà du seuil ; et
- au moins un moyen de guidage (31, 52 ; 152) du plancher, solidaire du fond du coffre, apte à coopérer par contact avec la ou chaque piste de guidage pour guider le déplacement du plancher,
**caractérisé en ce que** la ou chaque piste de guidage comprend une portion inclinée (29 ; 160) d'un premier angle (a ; c) par rapport à la surface supérieure du plancher, et propre, par contact avec une région du ou de chaque moyen de guidage, à soulever le plancher lors de son déplacement pour que le rebord arrière (23 ; 123) de celui-ci franchisse le seuil.

2. Dispositif (10) selon la revendication 1, **caractérisé en ce que** la région du ou de chaque moyen de guidage (31, 52) est inclinée d'un second angle (a') par rapport au fond (2) sensiblement horizontal.

3. Dispositif selon la revendication 1 ou la revendication 2, **caractérisé en ce que** la portion inclinée (29) de la ou de chaque piste de guidage comprend un rail dit mobile fixé sur la surface inférieure du plancher (12), et **en ce que** la région du ou de chaque moyen de guidage comprend un rail dit fixe (31), ledit rail mobile étant apte à coulisser le long du rail fixe.

4. Dispositif selon la revendication 3, **caractérisé en ce que** le rail fixe (31) est monté pivotant sur le fond (2) du coffre (1) par une liaison charnière (32), et **en ce que** le rail fixe (31) repose sur un support (38) fixé à la structure du véhicule et propre à maintenir le rail fixe incliné dudit second angle (a') par rapport au fond (2) sensiblement horizontal.

5. Dispositif selon l'une quelconque des revendications 2 à 4, **caractérisé en ce que** lesdits premier et second angles (a, a') sont égaux de sorte que la surface supérieure (22) du plancher (12) est sensiblement horizontale, dans chaque position du plancher entre sa position rétractée et sa position de chargement / déchargement.

6. Dispositif selon l'une quelconque des revendications 1 à 5, **caractérisé en ce que** le ou chaque moyen de guidage (31, 52) comprend, en outre, un moyen de roulement logé dans le seuil (6) du coffre (1), dont la surface de roulement fait saillie à l'extérieur du seuil du coffre, et adapté pour être en contact direct de la portion inclinée (29) d'une piste de guidage lors du déplacement du plancher (12).

7. Dispositif (110) selon la revendication 1, **caractérisé en ce que** la portion inclinée (160) de la ou de chaque piste de guidage comprend un chanfrein ménagé sur le bord arrière (123) du plancher (112), le chanfrein formant un angle (c) aigu avec la surface supérieure (122) du plancher.

8. Dispositif selon la revendication 7, **caractérisé en ce que**, la portion inclinée (160) forme une première portion d'une piste de guidage, une seconde portion de la piste de guidage comprend un rail dit mobile (129) fixé sur la surface inférieure du plancher (112), les première et seconde portions se raccordant continûment.

9. Dispositif selon la revendication 8, **caractérisé en ce qu'**il comprend, en outre, un rail dit fixe (131), ledit rail mobile (129) étant apte à coulisser le long du rail fixe.

10. Dispositif selon la revendication 9, **caractérisé en ce que**, le rail fixe (131) est monté pivotant sur le fond (2) du coffre (1) par une liaison charnière (132), et **en ce que** en position rétractée du plancher, ledit rail fixe repose directement sur le fond du coffre sensiblement horizontal.

11. Dispositif selon l'une quelconque des revendications 7 à 10, **caractérisé en ce que** le ou chaque moyen de guidage comprend un moyen de roulement (152) définissant la région destinée à coopérer avec la portion inclinée (160) d'une piste de guidage, la région faisant saillie à l'extérieur du seuil du coffre pour venir en contact direct de ladite portion inclinée.

12. Dispositif selon l'une quelconque des revendications précédentes, **caractérisé en ce qu'**il comprend, en outre, au moins un moyen de préhension (18 ; 118) du plancher (12 ; 112), prévu sur le plancher au voisinage du rebord arrière (23 ; 123) de celui-ci, le ou chaque moyen de préhension comprenant des moyens de déblocage adaptés pour que leur actionnement autorise le mouvement relatif du ou de chaque moyen de guidage le long du ou de chaque piste de guidage.

13. Dispositif selon la revendication 12, **caractérisé en ce qu'**il comprend des moyens de sécurité, propres à interdire tout mouvement relatif du ou de chaque moyen de guidage le long du ou de chaque piste de guidage, dans chaque position du plancher entre ses positions extrêmes rétractée et de chargement / déchargement, les moyens de déblocage de ou de chaque moyen de préhension étant propres à déverrouiller lesdits moyens de sécurité pour autoriser un mouvement relatif du ou de chaque moyen de guidage le long du ou de chaque piste de guidage, dans chaque position du plancher entre les positions extrêmes rétractée et de chargement /déchargement.

14. Dispositif selon la revendication 12 ou la revendication 13, **caractérisé en ce que** le plancher est monté pivotant par rapport au fond du coffre, le ou chaque moyen de préhension comprenant des moyens de libération adaptés pour que leur actionnement autorise le pivotement du plancher par rapport au fond du coffre.

15. Dispositif selon l'une quelconque des revendications précédentes, **caractérisé en ce qu'**il comprend un moyen d'entraînement du déplacement du plancher (12 ; 112).

## Claims

1. Device (10; 110) for aiding loading and unloading for a motor vehicle boot (1), the said boot being delimited, on the underside, by a bottom (2) which is bordered, on the rear side, by a raised sill (6) projecting vertically above the level of the bottom of the boot, the device comprising:
a floor (12; 112) having a substantially flat upper surface (22; 122) which is intended to receive a load. and a lower surface which carries at least one guide track, the floor being movable between: a retracted position in which said floor is disposed entirely inside the boot, so that a rear edge (23; 123) of the floor is situated at a level which is lower than, or equal to, the highest level of the sill; and a position for loading/unloading the boot in which the rear edge of the floor is situated above the highest, level of the sill and in a manner projecting out of the boot, beyond said sill; and
- at least one means (31, 52; 152) for guiding the floor, which means is integral with the bottom of the boot and is capable of cooperating, by contact, with the guide track, or with each guide track, in order to guide the displacement of the floor;
**characterised in that** the guide track, or each guide track, comprises a portion (29; 160) which is inclined by a first angle (a; c) in relation to the upper surface of the floor and is adapted, by contact with a region of the guide means, or of each guide means, to lift the floor when it is displaced, so that the rear edge (23; 123) of the latter passes over the cill.

2. Device (10) according to claim 1, **characterised in that** the region of the guide means, or of each guide means, (31, 52) is inclined by a second, angle (a') in relation to the substantially horizontal bottom (2).

3. Device according to claim 1 or claim 2, **characterised in that** the inclined portion (29) of the guide track, or of each guide track, comprises a so-called "movable" rail which is fixed onto the lower surface of the floor (12), and **in that** the region of the guide means, or of each guide means, comprises a so-called fixed" rail (31), the said movable rail being capable of sliding along the fixed rail.

4. Device according to claim 3, **characterised in that** the fixed rail (31) is mounted in a pivoting manner on the bottom (2) of the boot (10) by a hinge link- (32), and **in that** the fixed rail (31) rests on a support (38) which is fixed to the structure of the vehicle and is adapted to keep the fixed rail inclined by the said second angle (a') in relation to the substantially horizontal bottom (2).

5. Device according to any of claims 2 to 4, **characterised in that** the said first and second angles (a, a') are equal, so that the upper surface (22) of the floor (12) is substantially horizontal in each position of the floor between its retracted position and its loading/unloading position.

6. Device according to any of claims 1 to 5, **characterised in that** the guide means, or each guide means, (31, 52) comprises, in addition, a rolling means which is housed in the sill (6) of the boot (1) and of which the rolling surface projects outside the sill of the boot, and which rolling means is adapted to be in direct contact with the inclined portion (29) of a guide track when the floor (12) is displaced.

7. Device (110) according to claim 1, **characterised in that** the inclined portion (160) of the guide track, or of each guide track, comprises a chamfer which is arranged on the rear edge (123) of the floor (112), said chamfer forming an acute angle (c) with the upper surface (122) of the floor.

8. Device according to claim 7, **characterised in that** the inclined portion (160) forms a first portion of a guide track, and a second portion of the guide track comprises a so-called "movable" rail (129) which is fixed onto the lower surface of the floor (112), the first and second portions linking up in a continuous manner.

9. Device according to claim 8, **characterised in that** it comprises, in addition, a so-called "fixed" rail (131), the said movable rail (129) being capable of sliding along the fixed rail.

10. Device according to claim 5, **characterised in that** the fixed rail (131) is mounted in a pivoting manner on the bottom (2) of the boot (1) by a hinge link (132), and **in that**, when the floor is in the retracted position, the said fixed rail rests directly on the substantially horizontal bottom of the boot.

11. Device according to any of claims 7 to 10, **characterised in that** the guide means, or each guide means, comprises a rolling means (152) that defines the region which is intended to cooperate with the inclined portion (160) of a guide track, said region projecting outside the sill of the boot in order to come into direct contact with the said inclined portion.

12. Device according to any of the preceding claims, **characterised in that** it comprises, in addition, at least one means (18; 118) for gripping the floor (12; 112), which means is provided on the floor in the vicinity of the rear edge (23; 123) of the latter, the gripping means, or each gripping means, comprising releasing means which are adapted so that actuation thereof allows the relative movement of the guide means, or of each guide means, along the guide track, or along each guide track.

13. Device according to claim 12, **characterised in that** it comprises safety means which are adapted to prohibit any relative movement of the guide means, or of each guide means, along the guide track, or along each guide track, in each positions of the floor between its extreme retracted position and its extreme loading/unloading position, the means for releasing the gripping means, or each gripping means, being adapted to unlock the said safety means in order to allow a relative movement of the guide means, or of each guide means, along the guide track, or along each guide track, in each position of the floor between the extreme retracted position and the extreme loading/unloading position.

14. Device according to claim 12 or claim 13, **characterised in that** the floor is mounted so as to pivot in relation to the bottom of the boot, the gripping means, or each gripping means, comprising freeing means which are adapted so that actuation thereof allows the pivoting of the floor in relation to the bottom of the boot.

15. Device according to any of the preceding claims, **characterised in that** it comprised a means for deriving the displacement of the floor (12; 112).

## Patentansprüche

1. Hilfsvorrichtung zum Lader oder Entladen (10, 110) für einen Kraftfahrzeugkofforaum (1) wobei der Kofferraum unten von einem Grund (2) abgegrenzt ist, der auf der Rückseite von einer überhöhten Schwelle (6), die vertikal oberhalb des Niveaus des Grunds des Kofferraums hochragt, begrenzt ist, wobei die Vorrichtung Folgendes aufweist:
- einen Fußboden (12; 112), der eine obere Fläche (22; 122) aufweist, die im Wesentlichen eben ist, die dazu bestimmt ist, eine Last aufzunehmen, und eine untere Fläche, die mindestens eine Führungsspur trägt, wobei der Fußboden beweglich ist zwischen: einer zurückgezogenen Position, in der der Fußboden integral im Inneren des Kofferraums angeordnet ist, so dass ein hinterer Rand (23; 123) des Fußbodens auf einem Niveau niedriger oder gleich dem höchsten Niveau der Schwelle liegt, und einer Lade/Endladeposition des Kofferraums, in der der hintere Rand des Fußbodens oberhalb des höchsten Niveaus der Schwelle und aus dem Kofferraum vorragend über die Schwelle hinaus liegt, und
- mindestens ein Führungsmittel (31, 52; 152) des Fußbodens, das fest mit dem Grund des Kofferraums verbunden ist, das durch Berührung mit der Führungsspur oder jeder Führungsspur zusammenwirken xann, um die Bewegung aes Fußbodens zu führen,
**dadurch gekennzeichnet, dass** die oder jede Führungsspur einen Abschnitt (29; 160) aufweist, der um einen ersten Winkel (a; c) in Bezug zu der oberen Fläche des Fußbodens geneigt ist und durch Berührung mit einem Bereich des oder jedes Führungsmittels den Fußboden bei seiner Bewegung anheben kann, damit der hintere Rand (23; 123) dieses die Schwelle überwindet.

2. Vorrichtung (10) nach anspruch 1, **dadurch gekennzeichnet, dass** der Bereich des oder jedes Führungsmittels (31, 52) um einen zweiten Winkel (a') in Bezug zu dem im Wesentlichen horizontalen Grund (2) geneigt ist.

3. Vorrichtung nach Anspruch 1 oder 2, **dadurch gekennzeichnet, dass** der geneigte Abschnitt (29) der oder jeder Führungsspur eine sogenannte bewegliche Schiene aufweist, die auf der unteren Fläche des Fußbodens (12) befestigt ist, und dass der Bereich des oder jedes Führungsmittel eine sogenannte stationäre Schiene (31) aufweist, wobei die bewegliche Schiene entlang der stationären Schiene gleiten kann.

4. Vorrichtung nach Anspruch 3, **dadurch gekennzeichnet, dass** die stationäre Schiene (31) auf dem Grund (2) des Kofferraums (1) durch eine Scharnierverbindung (32) schwenkend montiert ist, und dass die stationäre Schiene (31) auf einem Träger (38) ruht, der an dem Aufbau des Fahrzeugs befestigt ist und die geneigte stationäre Schiene um den zweiten Winkel (a') in Bezug zu dem im Wesentlichen horizontalen Grund (2) geneigt halten kann.

5. Vorrichtung nach einem der Ansprüche 2 bis 4, **dadurch gekennzeichnet, dass** der erste und der zweite Winkel (a, a') gleich sind, so dass die obere Fläche (22) des Fußbodens (12) in jeder Position des Fußbodens zwischen seiner zurückgezogenen Position und seiner Lade/Entladeposition im wesentlichen horizontal ist.

6. Vorrichtung nach einem der Ansprüche 1 bis 5, **dadurch gekennzeichnet, dass** das oder jedes Führungsmittel (31, 52) ferner ein Rollmittel aufweist, das in der Schwel.le (6) des Kofferraums (1) untergebracht ist, dessen Rollfläche aus der Schwelle des Kofferraums vorragt und bei der Bewegung des Fußbodens (12) in direktem Kontakt mit dem geneigten Anschnitt (29) einer Führungsspur sein kann.

7. Vorrichtung (110) nach Anspruch 1, **dadurch gekennzeichnet, dass** der geneigte Abschnitt (160) der oder jeder Führungsspur eine Abschrägung aufweist, die auf dem hinteren Rand (123) des Fußbodens (112) eingerichtet ist, wobei die Abschrägung einen spitzen Winkel (c) mit der oberen Fläche (122) des Fußbodens bildet.

8. Vorrichtung nach Anspruch 7, **dadurch gekennzeichnet, dass** der geneigte Abschnitt (160) einen ersten Abschnitt einer Führungsspur bildet, ein zweiter Anschnitt der Führungsspur eine sogenannte bewegliche Schiene (129) umfasst, die auf der unteren Fläche des Fußbodens (112) befestigt ist, wobei der erste unter zweite Abschnitt unterbrechungslos aneinander anschließen.

9. Vorrichtung nach Anspruch 8, **dadurch gekennzeichnet, dass** sie ferner eine sogenannte stationäre Schiene (131) aufweist, wobei die bewegliche Schiene (129) entlang der stationären Schiene gleiten kann.

10. Vorrichtung nach Anspruch 9, **dadurch gekennzeichnet, dass** die stationäre Schiene (131) auf dem Grund (2) des Kofferraums (1) durch eine Scharniervorbindung (132) schwenkend montiert ist, und dass die stationäre Schiene bei eingezogener Position des Fußbodens direkt auf dem im Wesentlichen horizontalen Grund des Kofferraums aufliegt.

11. Vorrichtung nach einem der Ansprüche 7 bis 10, **dadurch gekennzeichnet, dass** das oder jedes Führungsmittel ein Rollmittel (162) aufweist, das den Bereich definiert, der dazu bestimmt ist, mit dem geneigten Abschnitt (160) einer Führungsspur zusammenzuwirken, wobei der Bereich außerhalb der Schwelle des Kofferraums vorsteht, um mit dem geneigten Abschnitt direkt in Kontakt zu kommen.

12. Vorrichtung nach einem der vorhergehenden Ansprüche, **dadurch gekennzeichnet, dass** sie zusätzlich mindestens ein Mittel (18; 118) zum Ergreifen des Fußbodens (12; 112) aufweist, das auf dem Fußboden in der Nähe des hinteren Rands (23; 123) dieses vorgesehen ist, wobei das oder jedes Greifmittel Lösemittel aufweist, die dazu eingerichtet sind, dass ihre Betätigung die relative Bewegung des oder jedes Führungsmittels entlang der oder jeder Führungsspur gestattet.

13. Vorrichtung nach Anspruch 12, **dadurch gekennzeichnet, dass** sie Mittel aufweist, die jede relative Bewegung des oder jedes Führungsmittel entlang der oder jeder Führungsspur in jeder Position des Fußbodens zwischen seiner eingezogenen Endposition und Lade/Entladeendposition untersagen können, wobei die Lösemittel des oder jedes Greifmittels die Sicherheitsmittel entriegeln können, um eine relative Bewegung des oder der Führungsmittel entlang der oder jeder Führungsspur in der Position des Fußbodens zwischen der eingezogenen Endposition und der Lade/Entladeendposition zu gestatten.

14. Vorrichtung nach Anspruch 12 oder 13, **dadurch gekennzeichnet, dass** der Fußboden in Bezug zu dem Grund des Kofferraums schwenkend montiert ist, dass das oder jedes Greifmittel Mittel zum Freigeben aufzeigt, die dazu angepasst sand, dass ihr Betätigen das Schwenken des Fußbodens in Bezug zu dem Grund des Kofferraums gestattet.

15. Vorrichtung nach einem der vorhergehenden Ansprüche, **dadurch gekennzeichnet, dass** sie ein Mittel zum Antreiben der Bewegung des Fußbodens (12; 112) aufweist.
